# EUROPÄISCHE PATENTSCHRIFT

(11) **EP 2 509 859 B1**
(45) Veröffentlichungstag und Bekanntmachung des Hinweises auf die Patenterteilung: **21.05.2014**
(21) Anmeldenummer: 10784812.9
(22) Anmeldetag: 02.12.2010
(51) Int. Cl.: B64C 9/24

(54) **HOCHAUFTRIEBSSYSTEM FÜR EIN FLUGZEUG, VERFAHREN ZUM BEWEGEN EINER AUFTRIEBSKLAPPE UND FLUGZEUG MIT EINEM HOCHAUFTRIEBSSYSTEM**
HIGH-LIFT SYSTEM FOR AN AIRCRAFT, METHOD FOR DISPLACING A LIFT FLAP, AND AIRCRAFT HAVING A HIGH-LIFT SYSTEM
SYSTÈME DE HAUTE SUSTENTATION POUR AVION, PROCÉDÉ DE DÉPLACEMENT D'UN VOLET DE SUSTENTATION ET AVION DOTÉ D'UN SYSTÈME DE HAUTE SUSTENTATION

(30) Priorität: 07.12.2009 DE 102009057340; 07.12.2009 US 267267 P
(43) Veröffentlichungstag der Anmeldung: 17.10.2012
(73) Patentinhaber: Airbus Operations GmbH, 21129 Hamburg (DE)
(72) Erfinder: SCHRÖDER, Karsten, 28201 Bremen (DE)
(74) Vertreter: Maiwald Patentanwalts GmbH
(86) Internationale Anmeldenummer: PCT/EP2010/068766
(87) Internationale Veröffentlichungsnummer: WO 2011/069887

(56) Entgegenhaltungen:
- WO-A1-2009/083255
- WO-A2-2010/040501
- DE-A1-102006 053 259
- DE-A1-102007 024 371
- US-A- 3 273 826
- US-B1- 6 375 126

## Beschreibung

### Bezug auf zugehörige Anmeldungen

Die vorliegende Anmeldung beansprucht die Priorität der US Provisional Patentanmeldung Nr. 61/267,267, eingereicht am 7. Dezember 2009 und der deutschen Patentanmeldung Nr. 10 2009 057 340.2, eingereicht am 7. Dezember 2009.

### Technisches Gebiet

Die Erfindung betrifft ein Hochauftriebssystem für ein Flugzeug, aufweisend mindestens eine an einem Tragflügel angeordnete Auftriebsklappe und mindestens eine Klappen-Verstellmechanik zum Bewegen der Auftriebsklappe zwischen einer eingefahrenen und mindestens einer ausgefahrenen Stellung gegenüber dem Tragflügel. Die Erfindung betrifft ferner auch ein Verfahren zum Bewegen einer Auftriebsklappe sowie ein Flugzeug mit mindestens einem vorgenannten Hochauftriebssystem.

### Hintergrund der Erfindung

Aus der Forderung nach einer möglichst hohen Reisefluggeschwindigkeit und gleichzeitig einer möglichst geringen Start- und Landegeschwindigkeit ergibt sich bei modernen Verkehrsflugzeugen die Notwendigkeit von Hochauftriebssystemen, die während Starts und Landungen zur deutlichen Erhöhung des Auftriebsbeiwerts aktiviert werden können. Dies geschieht im Allgemeinen durch auftriebserhöhende Klappen, die in die Luftströmung des Flugzeugs ausgelenkt werden. Besonders verbreitet werden eine Fülle von unterschiedlichen Vorflügeln bzw. Vorderkantenklappen sowie Flügelhinterkantenklappen in einfacher oder mehrfacher Aneinanderreihung eingesetzt, die zum Tragflügel bewegbar angeordnet sind.

Bewegbare Vorflügel, die auch Nasen-Spaltklappen ("extensible slat") genannt werden oder Vorderkantenklappen, etwa in Form von sogenannten Krügerklappen ("Krüger flap"), schmiegen sich in einer eingefahrenen Stellung an den Tragflügel an und bilden hierbei etwa einen Teil der Nase des Tragflügels oder können an einer Unterseite des Tragflügels in einer passend geformten Ausnehmung untergebracht werden, um eine durchgängige, bündige Oberfläche zu bilden. In einer oder mehreren ausgefahrenen Stellungen werden Vorflügel von der Vorderkante des Tragflügels beabstandet bzw. versetzt und bilden dadurch einen Spalt zwischen dem Vorflügel und der Vorderkante des Tragflügels aus. Durch den Spalt gerät aus der Anströmung des Flugzeugs eine energiereiche Luftströmung auf die Profiloberseite des Tragflügels, um dort den Strömungsabriss zu größeren Anstellwinkeln hin zu verschieben. Vorderkantenklappen können je nach Bauform mit oder ohne Bildung eines Spalts in die Anströmung des Flugzeugs ausgelenkt werden. Gleichzeitig wird bei beiden genannten Auftriebshilfen an der Vorderkante des Tragflügels sowohl die Fläche des Tragflügels als auch dessen Krümmung vergrößert.

Übliche Vorflügel bzw. Vorderkantenklappen, die im folgenden der Einfachheit halber allgemein als "Auftriebsklappen" bezeichnet werden, weisen eine feste Struktur auf, deren Form an die Erfordernisse der Flügelkonfiguration für den Reiseflug ohne Aktivierung des Hochauftriebssystems ("clean wing"-Konfiguration) angepasst sind. Dadurch wird die Geometrie des Spalts zwischen Vorflügeln und Vorderkanten von Tragflügeln bestimmt.

In DE 10 2006 053 259 A1 und WO 2008/058695 A1 wird ein Hochauftriebssystem für einen Tragflügel eines Flugzeugs vorgestellt, bei dem Auftriebsklappen zur Erhöhung des Auftriebs aus einer eingefahrenen in ausgefahrene Positionen bringbar sind, wobei ein Spalt zwischen den Hochauftriebsklappen und dem Tragflügel unabhängig von der Stellung der Hochauftriebsklappen geöffnet oder geschlossen werden kann. Dadurch ist das wahlweise Erreichen eines verbesserten Maximalauftriebsbeiwerts oder eines verbesserten Gleitverhältnisses mit geringerer Lärmentwicklung möglich.

Aus DE 10 2007 063 583 A1 und WO 2009/083255 A1 ist ein Hochauftriebssystem für ein Flugzeug bekannt, bei dem eine Auftriebsklappe mit einem Tragflügel verbunden ist und durch mindestens zwei in Spannweitenrichtung entfernt voneinander angeordneten Verstellvorrichtungen mit jeweils einem ersten Hebel und einem zweiten Hebel verstellt werden kann.

US 3 273 826 D1 offenbart einen variablen, zu einem Flügel einen Luftspalt ausbildenden Vorflügel, der in zwei oder drei zueinander bewegbare Segmente unterteilt ist.

### Zusammenfassung der Erfindung

Bei bekannten Hochauftriebssystemen mit Spalt bildenden Auftriebsklappen verjüngt sich der gebildete Spalt zwischen einer Vorderseite der Auftriebsklappe und der Vorderkante des Tragflügels stromabwärts gesehen häufig bis zu einem Mindestspaltmaß. Es besteht jedoch die Möglichkeit, dass bekannte Hochauftriebssysteme mit Spalt keinen sich stromab verjüngenden Spalt ausbilden. Dies kommt dadurch, dass die üblicherweise steife Auftriebsklappe eine Form, Positionierung und Auslenkung aufweisen könnte, die durch äußere (z.B. kinematische) Randbedingungen beschränkt wird und daher keinen idealen konvergenten Spalt zulässt. In dieser Auslegung wird eine wesentlich geringere aerodynamische Auftriebserhöhung erzielt als in einer aerodynamisch optimalen Auslegung mit sich stromab verjüngenden Spalt Üblicherweise ist eine äußere Geometrie der Auftriebsklappe auf den Reiseflug angepasst, während die zu der Vorderkante des Tragflügels gerichtete Fläche durch Einbauten in dem Tragflügel nicht jede beliebige Form annehmen kann. Allgemein kann festgestellt werden, dass eine konvergent-divergente Form aerodynamisch nicht optimal ist, da die auf die Profiloberseite gerichtete Luftströmung einen Teil ihrer im Spalt aufgebauten Geschwindigkeit bis zum Strömungsausgang des Spalts wieder verliert.

Es könnte dementsprechend ein Bedarf an einem Hochauftriebssystem mit mindestens einer an einem Tragflügel angeordneten Auftriebsklappe und mindestens einer Klappen-Verstellmechanik zum Bewegen der Auftriebsklappe zwischen einer eingefahrenen und mindestens einer ausgefahrenen Stellung gegenüber dem Tragflügel bestehen, das eine aerodynamische Verbesserung bietet und den durch die Auftriebsklappe hervorgerufenen Effekt der Verschiebung des Strömungsabrisses auf der Profiloberseite des Tragflügels zu größeren Anstellwinkeln verbessert.

Dieser Bedarf könnte durch ein Hochauftriebssystem mit den Merkmalen des unabhängigen Anspruchs 1 gedeckt werden. Vorteilhafte Weiterbildungen sind den Unteransprüchen zu entnehmen.

Gemäß einem ersten Aspekt der vorliegenden Erfindung weist die Auftriebsklappe mindestens einen Bereich mit einer variablen Krümmung auf und ist dazu eingerichtet, einen Spalt zu dem Tragflügel auszubilden. Durch die variable Krümmung, die zwischen einer eingefahrenen Position und einer ausgefahrenen Position variiert werden könnte, könnte die Relativposition einer zu dem Tragflügel ragenden Kante der Auftriebsklappe in einer ausgefahrenen Stellung verändert werden. Dadurch wird eine Gestaltung des Spaltes derart ermöglicht, dass das Spaltmaß stromabwärts gesehen kontinuierlich eine Verjüngung erfährt. Diese kontinuierliche Verjüngung ist derart zu verstehen, dass der engste Querschnitt im Spalt im Falle einer starren Auftriebsklappe ohne zusätzliche Krümmung an der Hinterkante größer ist als der Austrittsquerschnitt und zwischen dem engsten Querschnitt und dem Austrittsquerschnitt keine oder nur wenige divergente Spaltgeometrien vorhanden sind. Bevorzugt verjüngt sich die Spaltgeometrie monoton oder zumindest abschnittsweise monoton.

Der Vorteil dieser konvergenten Spaltgeometrie liegt darin, dass das aerodynamische Verhalten bezüglich der Erhöhung des Auftriebs durch Verschieben der Strömungsablösung auf der Profiloberseite zu größeren Anstellwinkeln und Auftriebsbeiwerten hin verbessert wird, bei gleichen Abmessungen der Auftriebsklappe, bei gleichbleibenden kinematischen Randbedingungen und bei einem unveränderten Verstellmechanismus. Der sich verjüngende Spalt eliminiert die nachträgliche Expansion / Verzögerung der Strömung und beugt damit einer Geschwindigkeitsverringerung der Luft vor, die durch den Spalt strömt. Während des gesamten Durchströmvorgangs durch den Spalt wird die Geschwindigkeit der durchströmenden Luft erhöht, so dass eine wirksamere Erhöhung der Strömungsenergie auf der Profiloberseite erfolgen kann, die zu der Verschiebung der Strömungsablösung zu größeren Anstellwinkeln erforderlich ist.

Es ist darauf hinzuweisen, dass die variable Krümmung der Auftriebsklappe nicht über der gesamten Auftriebsklappenspannweite vorliegen muss. Eine Auftriebsklappe könnte auch nur teilweise mit einer variablen Krümmung ausgestattet sein. Zusätzlich wäre denkbar, dass ein Hochauftriebssystem mehrere Auftriebsklappen aufweist, von denen nur einige überhaupt eine variable Krümmung bereitstellen können.

Es ist besonders bevorzugt, dass der Bereich mit der variablen Krümmung der Auftriebsklappe eine Flexibilität aufweist und eine Vorformung besitzt, die zu einer ersten Krümmungsform der Auftriebsklappe führt. In der ersten Krümmungsform könnte die Auftriebsklappe dazu ausgerichtet sein, den konvergenten Spalt zu dem Tragflügel in einer ausgefahrenen Stellung der Auftriebsklappe einzustellen.

Die Flexibilität könnte beispielsweise dadurch erreicht werden, dass der Bereich mit variabler Krümmung eine Vorspannung aufweist, durch die die Auftriebsklappe stets in die erste Krümmungsform drängt, solange sie mechanisch nicht in eine zweite Krümmungsform gezwungen wird. Die zweite Krümmungsform könnte für die Verstaubarkeit in einer eingefahrenen Stellung angepasst sein, so dass sie in einer eingefahrenen Stellung eine bündige Profiloberfläche mit dem Tragflügel bildet.

Die Flexibilität könnte durch eine geeignete Materialauswahl erfolgen, durch aktive Federelemente oder durch eine geeignete Ausformung oder Profilierung der Bauteile der Auftriebsklappe. Die Flexibilität sollte ausreichend gering sein, um bei Flugphasen, in denen ein Hochauftriebssystem eingesetzt wird, ein Flattern oder eine kontinuierliche Krümmungsänderung zu vermeiden. Es bieten sich etwa Faserverbundwerkstoffe an, mit denen eine vorgespannte oder vorgekrümmte, flexible Auftriebsklappe gefertigt werden könnte. Eine erste Krümmungsform könnte sich durch die Vorspannung einstellen, die in einer ausgefahrenen Stellung nur der auftreffenden Luftströmung ausgesetzt ist. In einer eingefahrenen Stellung könnte die zweite Krümmungsform durch Andrücken der Auftriebsklappe an einen Anschlag oder dergleichen erreicht werden. Der besondere Vorteil bei der Verwendung von Faserverbundwerkstoffen liegt in der Dauerfestigkeit und gestaltbaren Flexibilität durch entsprechende Faserrichtungsvorgaben. Gegebenenfalls könnten auch andere ausreichend flexible Werkstoffe verwendet werden, beispielsweise metallische Werkstoffe, die ebenfalls vorgespannt einbaubar wären.

In einer weiteren vorteilhaften Ausführungsform des erfindungsgemäßen Hochauftriebssystems könnte ein Verstellelement in oder an die Auftriebsklappe integriert werden, die beim Auslenken der Auftriebsklappe in eine ausgefahrene Stellung einen schwenkbaren Hinterkantenbereich der Auftriebsklappe auslenkt. Beispielsweise könnte als Verstellelement eine passive Komponente in Form einer Zugfeder vorgesehen werden, die einen schwenkbaren Hinterkantenbereich anzieht und dadurch die erste Krümmungsform erzeugt. Gleichzeitig könnte ein passives Verstellelement in Form einer Druckfeder oder einer bestimmten Materialgestaltung oder -kombination der Auftriebsklappe realisiert werden, die eine Federwirkung hervorruft. Der schwenkbare Hinterkantenbereich muss nicht zwangsläufig als ein separates Bauteil ausgeführt sein, was bedeutet, dass ein Bereich der Auftriebsklappe flexibel ausgestaltet ist und dadurch einen durch Verstellelemente schwenkbaren Hinterkantenbereich realisiert, um eine erste oder eine zweite Krümmungsform zu erreichen. Auch ein separat gefertigter, steifer oder elastischer Hinterkantenbereich könnte an einem Scharnier, einem elastischen Materialübergang, einer Textilfläche oder dergleichen gelagert sein, um den schwenkbaren Hinterkantenbereich auszubilden. Neben passiven Verstellelementen könnten auch aktive Verstellelemente eingesetzt werden, beispielsweise kinematische Kopplungen, elektrische, hydraulische und pneumatische Aktuatoren.

In einer vorteilhaften Ausführungsform des erfindungsgemäßen Hochauftriebssystems ist der Krümmungsradius der Auftriebsklappe in der ersten Krümmungsform bei einer ausgefahrenen Stellung geringer als in der zweiten Krümmungsform bei einer eingefahrenen Stellung. Dies bedeutet, dass in der ausgefahrenen Stellung der Bereich mit variabler Krümmung stärker gekrümmt ist als in einer eingefahrenen Stellung. Der Spalt zwischen der ein gekrümmtes Profil aufweisenden Vorderkante des Tragflügels und der Auftriebsklappe ist dadurch kontinuierlich konvergent. Zusätzlich wird dadurch der erreichbare Auftriebsbeiwert erhöht.

In einer vorteilhaften Weiterbildung des erfindungsgemäßen Hochauftriebssystems weist der Tragflügel eine Aufnahmefläche auf, auf die die Auftriebsklappe bringbar ist, um die eingefahrene Stellung zu erreichen. Die Aufnahmefläche ist dabei derart geformt, dass sie mit einer Begrenzungsfläche der Auftriebsklappe mit einer zweiten Krümmungsform korrespondiert. Beim Aufbringen der Auftriebsklappe auf die Aufnahmefläche wird die sich mit einer ersten Krümmungsform an die Aufnahmefläche nähernde Auftriebsklappe in die zweite Krümmungsform zurückgezwungen.

Bevorzugt sind keine aktiven Elemente erforderlich, um den Wechsel von der ersten Krümmungsform in die zweite Krümmungsform zu erreichen. Es ist ausreichend, die zur ersten Krümmungsform vorgeformte Auftriebsklappe durch Aufbringen auf die geeignete Aufnahmefläche in die zweite Krümmungsform zurückzuformen, um eine möglichst platzsparende Unterbringung am Tragflügel zu erreichen und dabei eine aerodynamisch vorgegebene Form des Tragflügels für den Reiseflug herzustellen.

In einer bevorzugten Weiterbildung des erfindungsgemäßen Hochauftriebssystems ist die Aufnahmefläche an einer Unterseite des Tragflügels ausgebildet, wobei die Auftriebsklappe um die Vorderkante des Tragflügels herum rotierbar gelagert ist.

In einer ebenso vorteilhaften Weiterbildung des erfindungsgemäßen Hochauftriebssystems ist die Aufnahmefläche an der Oberseite des Tragflügels ausgebildet und die Auftriebsklappe ist zumindest anteilig entlang der Vorderkante auslenkbar zum Tragflügel angeordnet. Die Auftriebsklappe bildet beim Reiseflug einen Teil der Nase des Tragflügels.

Gemäß einer vorteilhaften Weiterbildung des erfindungsgemäßen Hochauftriebssystems weist die Aufnahmefläche einen Aufnahmeflächenschutz auf, der das Material des Tragflügels vor einem Durchscheuern oder einer zu großen Druckbelastung schützt, die sich beim Anlegen und Zurückdrängen der Auftriebsklappe in ihre zweite Krümmungsform einstellen könnte. Ein derartiger Aufnahmeflächenschutz sollte korrosionsbeständig sein und ein ähnliches oder gleiches thermisches Ausdehnverhalten aufweisen, wie der Tragflügel selbst oder durch entsprechende Mittel derart befestigt, dass eine unterschiedliche thermische Ausdehnung keine Beschädigung erwirkt. In Betracht kämen beispielsweise Bauteile aus Polytetrafluoethylen (Teflon), Edelstahl, Kevlar oder anderen geeigneten Werkstoffen.

Ein erfindungsgemäßes Verfahren zum Bewegen einer Auftriebsklappe relativ zu einem Tragflügel eines Flugzeugs könnte ebenfalls den vorangehend genannten Bedarf decken. Das erfindungsgemäße Verfahren weist im Wesentlichen die folgenden Schritte auf. Zunächst wird eine Auftriebsklappe zu dem Tragflügel relativ bewegt, um einen Spalt zwischen dem Tragflügel und der Auftriebsklappe zu erzeugen. Gleichzeitig oder nachfolgend mit der Bewegung der Auftriebsklappe erfolgt eine Änderung der Krümmung der Auftriebsklappe, so dass der Spalt zwischen der Auftriebsklappe und dem Profil des Tragflügels stromabwärts aerodynamisch ausreichend zum Beispiel monoton verringert wird. Dies bedeutet, dass eine streng monotone Konvergenz nicht unbedingt gefordert ist, der Spalt könnte sich stellenweise auch weder konvergent noch divergent erstrecken. Allerdings sind deutliche stromabwärts gerichtete divergente Erstreckungen zu vermeiden. Im Anschluss erfolgt ein Bewegen der Auftriebsklappe zu dem Tragflügel hin, wobei gleichzeitig oder vorher eine Änderung der Krümmung in umgekehrter Richtung wie bei der Ausfahrbewegung erfolgt.

Ferner wird der Bedarf durch ein Flugzeug mit einem vorgenannten Hochauftriebssystem gedeckt.

### Kurze Beschreibung der Figuren

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1 zeigt einen Ausschnitt eines erfindungsgemäßen Hochauftriebssystems mit einer Auftriebsklappe in einer ausgefahrenen und in einer eingefahrenen Stellung.
Fig. 2a und 2b zeigen ein weiteres Ausführungsbeispiel eines erfindungsgemäßen Hochauftriebssystems mit einer Auftriebsklappe in einer ausgefahrenen Stellung und in einer eingefahrenen Stellung.
Fig. 3a und 3b zeigen ein weiteres Ausführungsbeispiel eines erfindungsgemäßen Hochauftriebssystems mit einer Auftriebsklappe in einer ausgefahrenen Stellung und in einer eingefahrenen Stellung.
Fig. 4 zeigt in einer schematischen Blockansicht ein erfindungsgemäßes Verfahren.
Fig. 5 zeigt ein Flugzeug mit mindestens einem erfindungsgemäßen Hochauftriebssystem.
Fig. 6a - 6c zeigen den erreichbaren aerodynamischen Effekt.

### Detaillierte Darstellung exemplarischer Ausführungsformen

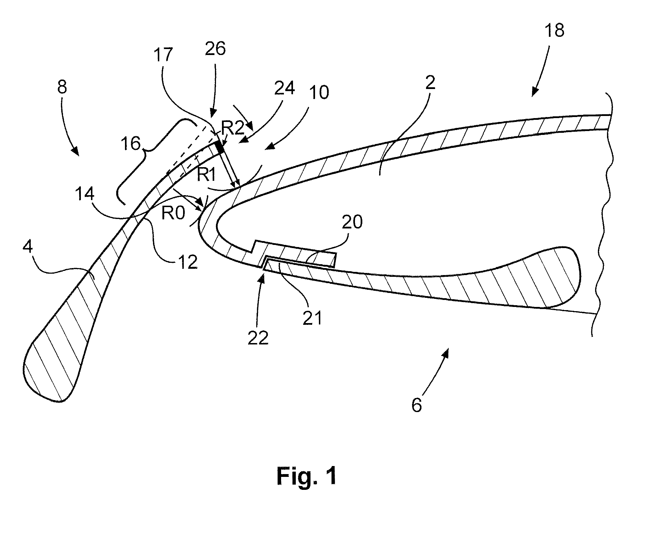

Die Fig. 1 zeigt teilweise ein Hochauftriebssystem an einem Tragflügel 2 eines Flugzeugs, welches eine an dem Tragflügel 2 angeordnete Auftriebsklappe 4 umfasst, die relativ zu dem Tragflügel 2 zum Erhöhen des Auftriebs von einer eingefahrenen Stellung 6 in eine exemplarisch dargestellte ausgefahrene Stellung 8 bewegt werden kann. In der eingefahrenen Stellung 6 ergänzt die Auftriebsklappe 4 den Tragflügel 2 zu einem glatten und für den Reiseflug ausgelegten Profil. In einer ausgefahrenen Stellung 8 wird die wirksame Fläche des Tragflügels 2 durch die Auftriebsklappe 4 ergänzt, wobei gleichzeitig ein Spalt 10 gebildet wird, der sich zwischen einer stromabwärts gelegenen Fläche 12 der Auftriebsklappe 4 und einer Flügelnase 14 erstreckt.

Es versteht sich, dass die Auftriebsklappe 4 bevorzugt mehrere unterschiedliche ausgefahrene Stellungen 8 aufnehmen könnte, so dass die Wirkung des Hochauftriebssystems bei Bedarf verändert werden kann.

Die Auftriebsklappe 4 weist einen Bereich 16 auf, der eine variable Krümmung besitzt. In der ausgefahrenen Stellung 8 weist die Auftriebsklappe 4 eine erste Krümmungsform 24 mit einem ersten Krümmungsradius/Abstand R1 zwischen der Hinterkante der Auftriebsklappe und der Oberfläche des Tragflügels 2 auf, so dass die Hinterkante 17 der Auftriebsklappe 4 am deutlichsten zu der Nase 14 des Tragflügels 2 gerichtet ist. Dadurch wird der Spalt 10 stromabwärts gesehen für die auf die Profiloberseite des Tragflügels 2 gerichtete Luftströmung aerodynamisch ausreichend kontinuierlich bzw. monoton enger. Dies verursacht eine besonders effektive Einleitung von energiereicher Luftströmung auf die Oberseite 18 des Tragflügels 2, so dass der Strömungsabriss zu größeren Anstellwinkeln verschoben wird. Der Vollständigkeit halber sei erwähnt, dass der Krümmungsradius R2 einem Abstand der Hinterkante zu der Oberfläche des Tragflügels 2 in der zweiten Krümmungsform 26 entspricht und R0 der bei der zweiten Krümmungsform 26 vorliegende Mindestabstand zwischen der Auftriebsklappe und dem Tragflügel 2 ist. Erfindungsgemäß ist R1 kleiner als / gleich R0.

Die Auftriebsklappe 4 ist derart eingerichtet, dass der Bereich mit einer flexiblen Krümmung 16 auch derart in eine zweite Krümmungsform 26 verformt werden könnte, dass sie sich an eine Aufnahmefläche 20 anschmiegen kann. Diese Aufnahmefläche 20 könnte sich etwa in einer Ausnehmung befinden oder, wie in Fig. 1 der Fall, an einem Absatz 22 zu der äußeren Kontur des Tragflügels 2. Ein Aufnahmeflächenschutz 21 könnte auf der Aufnahmefläche 20 angebracht sein, um ein Durchscheuern oder Zerdrücken des Materials der Aufnahmefläche 20 zu verhindern. Die zweite Krümmungsform 26 ist durch die gestrichelten Linien der in einer ausgefahrenen Stellung 8 befindlichen Auftriebsklappe 4 ersichtlich.

Bevorzugt ist die Auftriebsklappe 4 derart eingerichtet, dass durch Andrücken der Auftriebsklappe 4 an die Aufnahmefläche 20 eine Rückformung von der ersten Krümmungsform 24 in die zweite Krümmungsform 26 erfolgt. Ein Verstellmechanismus, der in Fig. 1 nicht detailliert gezeigt ist, sollte bevorzugt die Auftriebsklappe 4 in der eingefahrenen Stellung arretieren, so dass dauerhaft die Kraft der Auftriebsklappe 4 aufgenommen werden kann, mit der die Auftriebsklappe von der zweiten Krümmung 26 in die erste Krümmung 24 zurückdrängt.

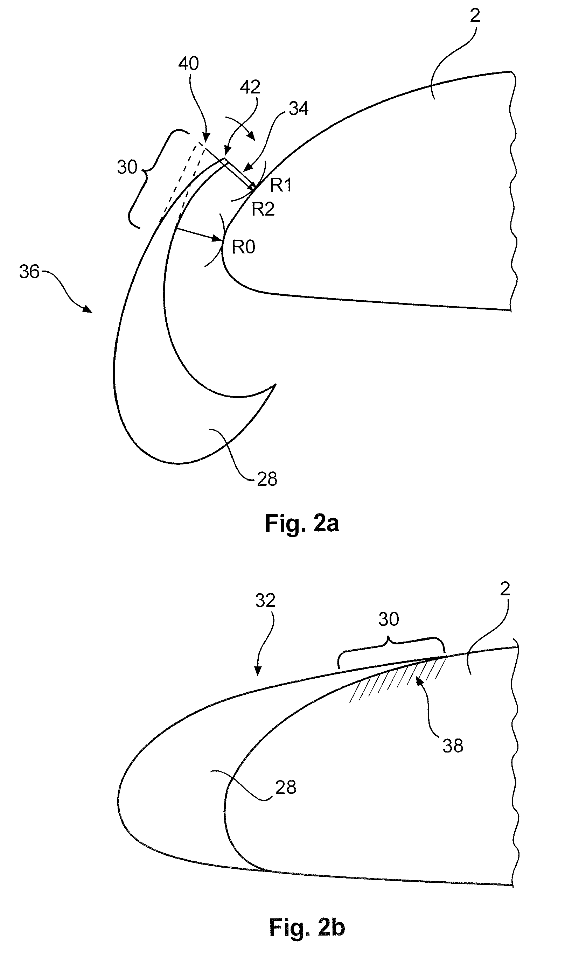

In Fig. 2a wird eine Auftriebsklappe 28 gezeigt, die ebenfalls einen Bereich 30 aufweist, der eine variable Krümmung besitzt. Die Auftriebsklappe 28 unterscheidet sich von der in der Fig. 1 gezeigten Auftriebsklappe 4 dadurch, dass sie in einer eingefahrenen Stellung zumindest abschnittsweise die Profilnase des Tragflügels 2 bildet. Der Bereich 30 mit variabler Krümmung ist derart ausgerichtet, dass ein Spalt 34 in einer ausgefahrenen Stellung 36 stromabwärts kontinuierlich eine Verengung erfährt, durch die die Verzögerung der Strömungsablösung auf der Oberseite des Profils des Tragflügels 2 verbessert wird. In der ersten Krümmungsform 42 wird ein Abstand/Krümmungsradius R1 zwischen der Hinterkante der Auftriebsklappe 4 und der Oberfläche des Tragflügels 2 erzielt, der kleiner als der Mindestabstand R0 zwischen der Auftriebsklappe 4 und der Oberfläche des Tragflügels 2 bei der zweiten Krümmungsform 40 ist.

In der eingefahrenen Stellung 32 liegt der Bereich 30 auf einer Aufnahmefläche 38 auf und wird dadurch in einer zweiten Krümmungsform 40 gehalten, die einen kontinuierlichen Übergang mit der Profilierung des Tragflügels 2 erlaubt. In der ausgefahrenen Stellung 36 drängt der Bereich mit variabler Krümmung 30 in eine erste Krümmungsform 42, die zu den gewünschten Eigenschaften des Spalts 34 führt.

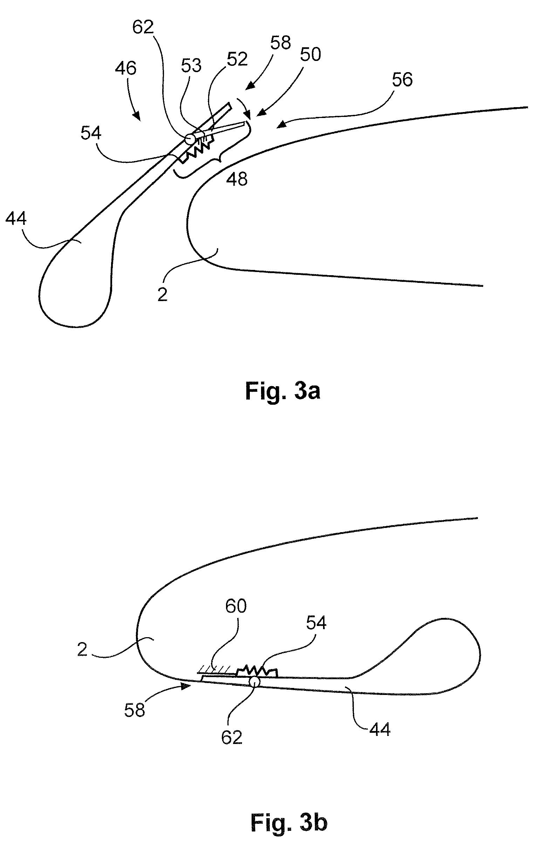

In den Fig. 3a und 3b wird ein weiteres Ausführungsbeispiel gezeigt, bei dem eine Auftriebsklappe 44 ebenfalls einen Bereich 48 aufweist, der eine variable Krümmung besitzt. In der ausgefahrenen Stellung 46 weist die Auftriebsklappe 44 eine erste Krümmungsform 50 auf, bei der ein schwenkbar angeordneter Hinterkantenbereich 52 über ein Verstellelement 54, das hier als Zugfeder ausgeführt ist und auch in Form jeder geeigneten passiven oder aktiven Komponente realisiert werden kann, zu dem Tragflügel 2 hin ausgelenkt ist. Hierdurch entsteht ein Spalt 56, der stromabwärts gesehen für die auf die Profiloberseite des Tragflügels 2 gerichtete Luftströmung aerodynamisch ausreichend kontinuierlich bzw. monoton enger wird. Dies verursacht eine effektive Einleitung von energiereicher Luftströmung auf die Oberseite 18 des Tragflügels 2, so dass der aerodynamische Strömungsabriss zu größeren Anstellwinkeln verschoben wird. Zum Sicherstellen einer definierten und nicht zu weiten Auslenkung könnte ein Anschlag 53 vorgesehen werden, der auch in ein Scharnier 62 integriert sein könnte.

Der Spalt zwischen der Auftriebsklappe 4 und dem Tragflügel 2 ist überwiegend konvergent, lediglich ein sehr schmaler Bereich ist tendenziell divergent geformt. Der Austrittsquerschnitt des Spalts zwischen dem verschwenkten Hinterkantenbereich und der Oberfläche des Tragflügels ist kleiner als dessen Eintrittsquerschnitt.

In einer eingefahrenen Stellung 63, die in Fig. 3b ersichtlich ist, befindet sich die Auftriebsklappe 44 in einer eingefahrenen Stellung, in der der schwenkbar angeordnete Hinterkantenbereich 52 in einer zweiten Krümmungsform 58 vorliegt, die sich an eine entsprechende Aufnahmefläche 60 anschmiegt. Hierdurch wird das Verstellelement 54 gespannt, so dass beim Auslenken der Auftriebsklappe 44 ein Zurückschwenken des bewegbar gelagerten Hinterkantenbereichts 52 die erste Krümmungsform 50 eingenommen wird.

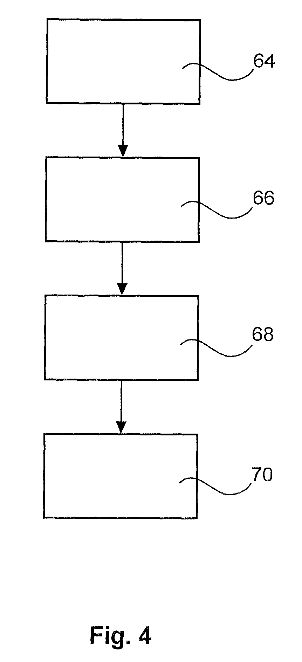

In Fig. 4 wird schematisch in einer Blockdarstellung das erfindungsgemäße Verfahren gezeigt. Während oder nach der Bewegung 64 einer Auftriebsklappe relativ zu dem Tragflügel zum Ausbilden eines Spalts zwischen dem Tragflügel und der Auftriebsklappe wird die Krümmung der Auftriebsklappe geändert 66, so dass der Spalt zwischen der Auftriebsklappe und dem Profil des Tragflügels stromabwärts kontinuierlich verringert wird. Im Anschluss, wenn das Hochauftriebssystem wieder deaktiviert werden soll, erfolgt ein Bewegen 68 der Auftriebsklappe zu dem Tragflügel hin, wobei mit Anlegen der Auftriebsklappe auf eine Aufnahmefläche oder durch ein aktives Zurückschwenken über eine aktive Komponente eine Änderung der Krümmung in umgekehrter Richtung wie bei der Ausfahrbewegung erfolgt 70.

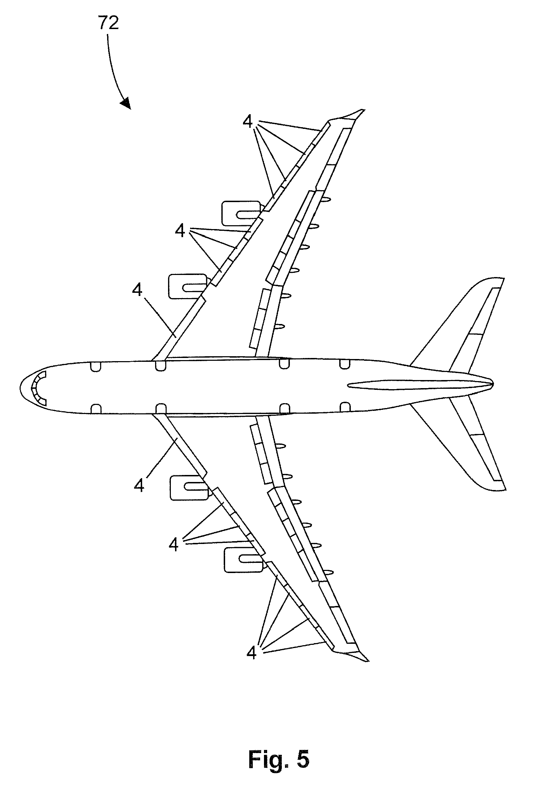

Weiterhin zeigt Fig. 5 ein Flugzeug 72 mit mindestens einem Hochauftriebssystem nach den vorhergehend geschilderten Merkmalen.

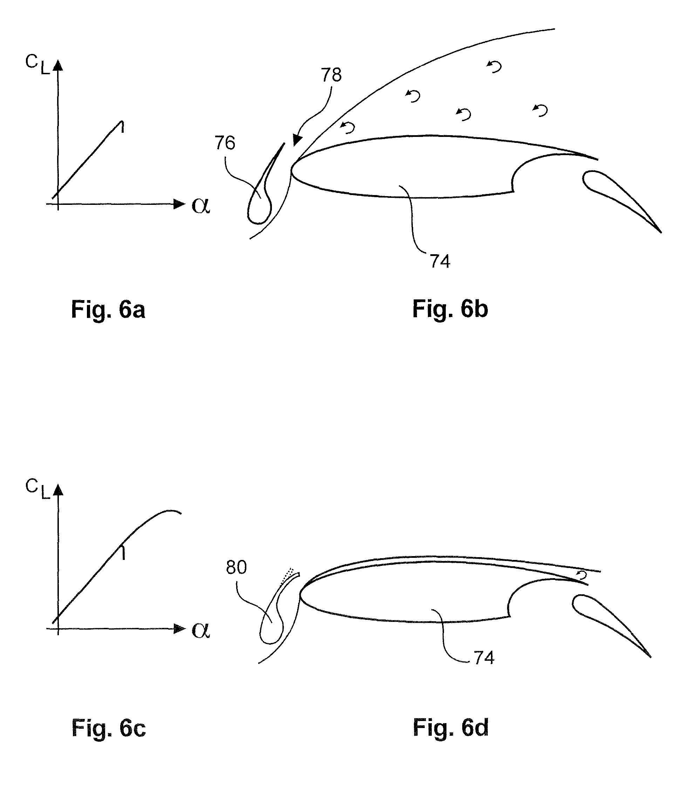

In den Fig. 6a und 6b wird der Verlauf des Auftriebs cL über dem Anstellwinkel α für einen ein herkömmliches Hochauftriebssystem aufweisenden Tragflügel 74 gezeigt, bei dem eine Auftriebsklappe 76 an einer Vorderkante des Tragflügels 74 einen überwiegend divergenten Spalt 78 ausbildet. Bei dem gezeigten Anstellwinkel α reißt die Strömung ab, so dass die Auftriebserzeugung einbricht. Die Zufuhr energiereicher Strömung auf die Oberseite des Tragflügels 74 über den Spalt 78 erfolgt nicht optimal.

In den Fig. 6c und 6d hingegen wird eine Auftriebsklappe 80 an dem Tragflügel 74 eingesetzt, die den Strömungsabriss bei dem gezeigten Anstellwinkel α verhindern kann. Die Strömung an der Oberseite des Tragflügels 74 liegt an und der erreichbare Auftrieb liegt gemäß des Diagramms in Fig. 6c auf einem deutlich höheren Niveau als bei Verwendung eines herkömmlichen Hochauftriebssystems mit einer steifen Auftriebsklappe 76, wie aus dem Vergleich von Fig. 6a und 6c sehr deutlich zu erkennen ist.

Ergänzend sei darauf hinzuweisen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Tragflügel
- 4: Auftriebsklappe
- 6: eingefahrene Stellung
- 8: ausgefahrene Stellung
- 10: Spalt
- 12: Fläche
- 14: Flügelnase
- 16: Bereich mit variabler Krümmung
- 17: Hinterkante
- 18: Oberseite
- 20: Aufnahmefläche
- 22: Absatz
- 24: erste Krümmungsform
- 26: zweite Krümmungsform
- 28: Auftriebsklappe
- 30: Bereich mit variabler Krümmung
- 32: eingefahrene Stellung
- 34: Spalt
- 36: ausgefahrene Stellung
- 38: Aufnahmefläche
- 40: zweite Krümmungsform
- 42: erste Krümmungsform
- 44: Auftriebsklappe
- 46: ausgefahrene Stellung
- 48: Bereich mit variabler Krümmung
- 50: erste Krümmungsform
- 52: Hinterkantenbereich
- 53: Anschlag
- 54: Verstellelement
- 56: Spalt
- 58: zweite Krümmungsform
- 60: Aufnahmefläche
- 62: Scharnier
- 63: eingefahrene Stellung
- 64: Bewegen
- 66: Ändern der Krümmung
- 68: Bewegen
- 70: Änderung der Krümmung
- 72: Flugzeug
- 74: Tragflügel
- 76: Auftriebsklappe
- 78: Spalt
- 80: Auftriebsklappe

## Patentansprüche

1. Hochauftriebssystem für ein Flugzeug, aufweisend einen Tragflügel (2) und mindestens eine an dem Tragflügel (2) angeordnete Auftriebsklappe (4, 28, 44, 76, 80), die mit dem Tragflügel (2) gekoppelt ist und dazu eingerichtet ist, relativ zu dem Tragflügel (2) zwischen einer eingefahrenen Stellung (6, 32, 63) und mindestens einer ausgefahrenen Stellung (8, 36, 46) gegenüber dem Tragflügel (2) bewegbar zu sein, wobei die Auftriebsklappe (4, 28, 44, 76, 80) in der eingefahrenen Stellung (6, 32, 63) an dem Tragflügel (2) anliegt und in einer ausgefahrenen Stellung (8, 36, 46) einen Luftspalt (10, 34, 56, 78) zu dem Tragflügel (2) ausbildet,
wobei die Auftriebsklappe (4, 28, 44, 76, 80) zu ihrer Hinterkante (17, 52) gerichtet mindestens einen Bereich (16, 30, 48) mit einer variablen Krümmung aufweist, **dadurch gekennzeichnet, dass** sich der Bereich in einer ausgefahrenen Stellung der Auftriebsklappe (4, 28, 44, 76, 80) zum Tragflügel (2) derart erstreckt, dass sich der Luftspalt (10, 34, 56, 78) kontinuierlich verjüngt.

2. Hochauftriebssystem nach Anspruch 1,
**dadurch gekennzeichnet, dass** die Auftriebsklappe (4, 28, 44, 76, 80) in einer ausgefahrenen Stellung (8, 36, 46) stromaufwärts zu einer ein gekrümmtes Profil aufweisenden Vorderkante des Tragflügels (2) versetzt ist.

3. Hochauftriebssystem nach Anspruch 1 oder 2,
**dadurch gekennzeichnet, dass** die Auftriebsklappe (4, 28, 44, 76, 80) dazu eingerichtet ist, mindestens eine erste Krümmungsform (24, 42, 50) und eine zweite Krümmungsform (26, 40, 58) einzunehmen.

4. Hochauftriebssystem nach einem der vorhergehenden Ansprüche,
**dadurch gekennzeichnet, dass** sich der Spalt (10, 34, 56, 78) zwischen einer Hinterkante (17, 52) der in einer ausgefahrenen Stellung (8, 36, 46) befindlichen Auftriebsklappe (4, 28, 44, 76, 80) und der Oberfläche des Tragflügels (2) erstreckt, der bei Einnehmen einer ersten Krümmungsform (24, 42, 50) stromabwärts konvergent ist.

5. Hochauftriebssystem nach einem der vorhergehenden Ansprüche,
**dadurch gekennzeichnet, dass** der Bereich (16, 30, 48) mit variabler Krümmung flexibel ausgestaltet ist und die Auftriebsklappe (4, 28, 44, 76, 80) in eine erste Krümmungsform (24, 42, 50) vorgeformt ist.

6. Hochauftriebssystem nach einem der vorhergehenden Ansprüche,
**dadurch gekennzeichnet, dass** die Auftriebsklappe (4, 28, 44, 76, 80) aus einem Faserverbundwerkstoff hergestellt ist.

7. Hochauftriebssystem nach einem der vorhergehenden Ansprüche,
**dadurch gekennzeichnet, dass** die Auftriebsklappe (4, 28, 44, 76, 80) einen schwenkbaren Hinterkantenbereich aufweist, der über ein Verstellelement (54) bewegbar ist, wobei die Auftriebsklappe (4, 28, 44, 76, 80) durch Bewegen des schwenkbaren Hinterkantenbereichs in eine erste und in eine zweite Krümmungsform verstellbar ist.

8. Hochauftriebssystem nach Anspruch 7,
**dadurch gekennzeichnet, dass** das Verstellelement (54) passiv ist.

9. Hochauftriebssystem nach Anspruch 7,
**dadurch gekennzeichnet, dass** das Verstellelement (54) ein aktiver Aktuator ist.

10. Hochauftriebssystem nach einem der Ansprüche 7 bis 9,
**dadurch gekennzeichnet, dass** der schwenkbare Hinterkantenbereich eine separate, schwenkbar gelagerte Komponente ist.

11. Hochauftriebssystem nach einem der vorhergehenden Ansprüche,
**dadurch gekennzeichnet, dass** der Tragflügel (2) eine Aufnahmefläche (20, 38) aufweist, an die die Auftriebsklappe (4, 28, 44, 76, 80) zum Drängen in die zweite Krümmungsform andrückbar ist.

12. Hochauftriebssystem nach Anspruch 11,
**dadurch gekennzeichnet, dass** die Aufnahmefläche (20, 38) einen Aufnahmeflächenschutz aufweist.

13. Verfahren zum Bewegen einer Auftriebsklappe (4, 28, 44, 76, 80), aufweisend die Schritte:
Bewegen (64) der Auftriebsklappe (4, 28, 44, 76, 80) von einer eingefahrenen Stellung an einem Tragflügel in eine ausgefahrene Stellung;
Ändern (66) der Krümmung der Auftriebsklappe (4, 28, 44, 76, 80) in eine erste Krümmungsform derart, dass sich ein zwischen der Auftriebsklappe (4, 28, 44, 76, 80) und dem Tragflügel gebildeter Luftspalt (10, 34, 56, 78) kontinuierlich verjüngt.

14. Verfahren nach Anspruch 13, ferner aufweisend die Schritte:
Bewegen (68) der Auftriebsklappe (4, 28, 44, 76, 80) in eine eingefahrene Stellung zu dem Tragflügel hin;
Änderung (70) der Krümmung in eine zweite Krümmungsform..

15. Flugzeug, aufweisend zwei Tragflügel (2) und mindestens ein Hochauftriebssystem nach einem der Ansprüche 1 bis 12.

## Claims

1. A high lift system for an aircraft, comprising a wing (2) and at least one lift flap (4, 28, 44, 76, 80) arranged on the wing (2), which lift flap (4, 28, 44, 76, 80) is coupled to the wing (2) and is designed to be movable, relative to the wing (2),
between a retracted position (6, 32, 63) and at least one extended position (8, 36, 46), wherein the lift flap (4, 28, 44, 76, 80) in the retracted position (6, 32, 63) rests against the wing (2), and in an extended position (8, 36, 46) forms an air gap (10, 34, 56, 78) to the wing (2),
wherein the lift flap (4, 28, 44, 76, 80) directed towards its trailing edge (17, 52) comprises at least one region (16, 30, 48) of variable curvature,
**characterized in that** the region (16, 30, 48) in an extended position of the lift flap (4, 28, 44, 76, 80) extends towards the wing (4), such that the air gap (10, 34, 56, 78) continuiously tapers off.

2. The high lift system of claim 1,
**characterized in that** the lift flap (4, 28, 44, 76, 80) in an extended position (8, 36, 46) is offset upstream to a leading edge of the wing (2), which leading edge comprises a curved profile.

3. The high lift system of claim 1 or 2,
**characterized in that** the lift flap (4, 28, 44, 76, 80) is designed to assume at least one first shape of curvature (24, 42, 50) and a second shape of curvature (26, 40, 58).

4. The high lift system of any one of the preceding claims,
**characterized in that** the gap (10, 34, 56, 78) extends between a trailing edge (17, 52) of the lift flap (4, 28, 44, 76, 80) that is in an extended position (8, 36, 46 CRA and the surface of the wing (2) which when it assumes a first shape of curvature (24, 42, 50) is convergent downstream.

5. The high lift system of any one of the preceding claims,
**characterized in that** the region (16, 30, 48) of variable curvature is designed to be flexible, and the lift flap (4, 28, 44, 76, 80) in a first shape of curvature (24, 42, 50) is pre-formed.

6. The high lift system of any one of the preceding claims,
**characterized in that** the lift flap (4, 28, 44, 76, 80) is made from a fiber composite material.

7. The high lift system of any one of the preceding claims,
**characterized in that** the lift flap (4, 28, 44, 76, 80) comprises a pivotable trailing edge region that is movable by way of an adjustment element (54), wherein the lift flap (4, 28, 44, 76, 80) is adjustable by moving the pivotable trailing edge region to a first and to a second shape of curvature.

8. The high lift system of claim 7,
**characterized in that** the adjustment element (54) is passive.

9. The high lift system of claim 7,
**characterized in that** the adjustment element (54) is an active actuator.

10. The high lift system of any one of claims 7 to 9,
**characterized in that** the pivotable trailing edge region is a separate, pivotably held component.

11. The high lift system of any one of the preceding claims,
**characterized in that** the wing (2) comprises a receiving surface (20, 38) against which the lift flap (4, 28, 44, 76, 80) can be pressed for insisting on assuming the second shape of curvature.

12. The high lift system of claim 11,
**characterized in that** the receiving surface (20, 38) comprises a receiving-surface protection device.

13. A method for moving a lift flap (4, 28, 44, 76, 80), comprising the steps of:
- moving (64) the lift flap (4, 28, 44, 76, 80) from a retracted position on a wing to an extended position;
- changing (66) the curvature of the lift flap (4, 28, 44, 76, 80) to a first shape of curvature in a way, that an air gap (10, 34, 56, 78) created between the lift flap (4, 28, 44, 76, 80) and the wing continuously tapers off.

14. The method of claim 13, further comprising the steps of:
- moving (68) the lift flap (4, 28, 44, 76, 80) to a retracted position towards the wing;
- changing (70) the curvature to a second shape of curvature.

15. An aircraft, comprising two wings (2) and at least one high lift system according to one of the claims 1 to 12.

## Revendications

1. Système hypersustentateur pour un avion, présentant une surface portante (2) et au moins un volet sustentateur (4, 28, 44, 76, 80) disposé contre la surface portante (2), lequel est couplé à la surface portante (2) et agencé de manière à pouvoir être déplacé par rapport à la surface portante (2) entre une position rentrée (6, 32, 63) et au moins une position sortie (8, 36, 46) par rapport à de la surface portante (2), le volet sustentateur (4, 28, 44, 76, 80) reposant dans la position rentrée (6, 32, 63) contre la surface portante (2) et formant dans une position sortie (8, 36, 46) une hauteur de fuite (10, 34, 56, 78) par rapport à la surface portante (2),
le volet sustentateur (4, 28, 44, 76, 80) présentant au moins une zone (16, 30, 48) avec une courbure variable et orientée vers son bord de fuite (17, 52),
**caractérisé en ce que**,
dans une position sortie du volet sustentateur (4, 28, 44, 76, 80), la zone s'étend vers la surface portante (2) de telle sorte que la hauteur de fuite (10, 34, 56, 78) diminue de manière continue.

2. Système hypersustentateur selon la revendication 1,
**caractérisé en ce que** le volet sustentateur (4, 28, 44, 76, 80) est déplacé dans une position sortie (8, 36, 46) en amont d'un bord d'attaque de la surface portante (2) présentant un profil courbé.

3. Système hypersustentateur selon la revendication 1 ou 2,
**caractérisé en ce que** le volet sustentateur (4, 28, 44, 76, 80) est configuré de manière à prendre au moins une première forme de courbure (24, 42, 50) et une seconde forme de courbure (26, 40, 58).

4. Système hypersustentateur selon une des revendications précédentes,
**caractérisé en ce que** la hauteur (10, 34, 56, 78) s'étend entre un bord de fuite (17, 52) du volet sustentateur (4, 28, 44, 76, 80) se trouvant dans une position sortie (8, 36, 46) et la surface de la surface portante (2) qui est convergente en aval lors de la prise d'une première forme de courbure (24, 42, 50).

5. Système hypersustentateur selon une des revendications précédentes,
**caractérisé en ce que** la zone (16, 30, 48) avec une courbure variable est réalisée de manière flexible et le volet sustentateur (4, 28, 44, 76, 80) est préformé dans une première forme de courbure (24, 42, 50).

6. Système hypersustentateur selon une des revendications précédentes,
**caractérisé en ce que** le volet sustentateur (4, 28, 44, 76, 80) est fabriqué à partir d'un matériau plastique renforcé en fibres.

7. Système hypersustentateur selon une des revendications précédentes,
**caractérisé en ce que** le volet sustentateur (4, 28, 44, 76, 80) présente une zone de bord de fuite pivotante qui peut être déplacée par un élément d'ajustement (54), le volet sustentateur (4, 28, 44, 76, 80) pouvant être ajusté par le déplacement de la zone de bord de fuite pivotante dans une première et une seconde forme de courbure.

8. Système hypersustentateur selon la revendication 7,
**caractérisé en ce que** l'élément d'ajustement (54) est passif.

9. Système hypersustentateur selon la revendication 7,
**caractérisé en ce que** l'élément d'ajustement (54) est un actionneur actif.

10. Système hypersustentateur selon une des revendications 7 à 9,
**caractérisé en ce que** la zone de bord de fuite pivotante est un composant séparé monté pivotant.

11. Système hypersustentateur selon une des revendications précédentes,
**caractérisé en ce que** la surface portante (2) présente une surface de réception (20, 38) contre laquelle le volet sustentateur (4, 28, 44, 76, 80) peut s'appuyer pour passer dans la seconde forme de courbure.

12. Système hypersustentateur selon la revendication 11,
**caractérisé en ce que** la surface de réception (20, 38) présente une protection de surface de réception.

13. Procédé de déplacement d'un volet sustentateur (4, 28, 44, 76, 80), présentant les étapes consistant à :
déplacer (64) le volet sustentateur (4, 28, 44, 76, 80) d'une position rentrée contre une surface portante dans une position sortie ;
modifier (66) la courbure du volet sustentateur (4, 28, 44, 76, 80) dans une première forme de courbure de telle sorte qu'une hauteur de fuite (10, 34, 56, 78) formée entre le volent sustentateur (4, 28, 44, 76, 80) et la surface portante diminue de manière continue.

14. Procédé selon la revendication 13, présentant en outre les étapes consistant à :
déplacer (68) le volet sustentateur (4, 28, 44, 76, 80) dans une position rentrée par rapport à la surface portante ;
modifier (70) la courbure dans une seconde forme de courbure.

15. Avion présentant deux surfaces portantes (2) et au moins un système hypersustentateur selon une des revendications 1 à 12.
